# EUROPEAN PATENT APPLICATION

(11) **EP 3 361 266 A1**
(43) Date of publication of application: **15.08.2018**
(21) Application number: 17460072.6
(22) Date of filing: 04.12.2017
(51) Int. Cl.: G01Q 40/00, G01Q 60/26

(54) **METHOD OF LATERAL FORCE CALIBRATION IN AN AFM MICROSCOPE AND DEVICE FOR LATERAL FORCE CALIBRATION IN AN AFM MICROSCOPE**

(30) Priority: 02.12.2016 PL 41966916
(71) Applicant: Instytut Podstawowych Problemów Techniki Polskiej Akademii Nauk, 02-106 Warszawa (PL)
(72) Inventor: Jarzabek, Dariusz, 02-390 Warszawa (PL); Dera, Wojciech, 98-310 Czarnozyly (PL); Dziekonski, Cezary, 12-230 Biala Podlaska (PL)
(74) Representative: Belz, Anna

(57) **Abstract**

The subject of the invention is a device for calibrating the lateral force exerted by the Atomic Force Microscope (AFM) measuring lever. The device can directly determine the lateral force calibration coefficient in lateral force microscopy (LFM).

## Description

The subject of the invention is a device for calibrating the lateral force exerted by a measuring cantilever in atomic force microscopes (AFM).

Atomic force microscopes are one of the most important measuring devices in micro and nanotechnology. They are particularly useful in the measurement of roughness and mechanical properties of thin layers and nanostructures. The principle of the AFM microscope is based on scanning the surface using a measuring cantilever. There is a tip at the end of the measuring cantilever that slides on the tested surface. Deflection of the measuring cantilever is caused by the topography of the scanned surface. If the deflection of the measuring cantilever is accurately measured, it is possible to reproduce the topography of the scanned surface. The most popular method of measuring the deflection of the measuring cantilever is by use of a laser beam that reflects from the cantilever and into the photodetector. The photodetectors used are able to measure the displacement of the laser spot in both vertical and horizontal directions. The movement of the laser spot in the horizontal direction corresponds to the twisting of the measuring cantilever. Twisting of the measuring cantilever is most often caused by the frictional force between the measuring tip and the scanned surface. Determining the calibration coefficients of the force with which the tip is pressed against the tested surface (the signal of laser spot shift in the vertical axis) and the calibration coefficient of the force twisting the measuring cantilever (the signal of laser spot shift in the horizontal axis), it is possible to measure the coefficient of friction between the measuring cantilever and the surface being scanned. There are many techniques of normal force calibration, which are used to determine the Young's modulus of thin polymer layers, or bending of micro and nanobars. However, there is a problem of calibration of lateral force, which is used, for example, to measure coefficients of friction or wear at the nano scale. The existing methods are either very inaccurate (measurement errors of 10%) or require the use of expensive additives, the price of which may exceed the price of the microscope itself. For example, the method described in the Review of Scientific Instruments journal No. 74 of 2003 pp. 3362-3367 is known. It consists of scanning a sample with etched silicon structure of known geometrical parameters and analysis of forces acting on the microscope's tip during the scanning of flat and tilted area. A method is also known from the above-quoted journal No. 86 from 2015, page 6, consisting of measuring the twist of the measuring cantilever using a micro or nanoindenter.

A device according to GB 2419952 is known. A rectangular hole is etched in the measuring beam of the device. The calibration is carried out based on the force exerted on the measuring beam of the calibration device by the tip of AFM microscope when scanning the edge of the hole. The device disclosed in this patent also uses a precision force sensor made in MEMS technology. However in this case, the microscope cantilever is twisted by the frictional force acting on the microscope tip while scanning the flat surface of the silicon measuring beam of the force sensor.

According to the invention, the method of side force calibration in the AFM microscope consists in the fact that on a force sensor of the measuring beam of the known roughness of said measuring beam a force is exerted generated by the friction of the AFM tip during the movement of cantilever on the measuring beam surface, the friction force measuring direction is perpendicular to the axis of the measuring cantilever. The friction force registered by the sensor is compared directly with the twisting signal of the cantilever of the microscope and on this basis the calibration factor of the lateral force of the microscope is determined.

Preferably, the displacement of the measuring beam is measured by means of a capacitive sensor.

The use of a flat measuring beam with a defined roughness for calibration and a comparison of the frictional force with the twist of the AFM microscope measuring cantilever increases the accuracy of the measurement by a factor of ten.

### Example

A friction force measuring unit was prepared, which was a sensor connected to a silicon measuring beam with a roughness of 10nm. The microscope was equipped with a measuring cantilever with a constant elasticity of 0.4 N / m. The sensor was electrically connected to the microscope cantilever. The tip of the cantilever was based on the force sensor's measuring beam, exactly aligned horizontally. The longer axis of the measuring cantilever was perpendicular to the direction of force measurement in the sensor. The measurement cantilever movement has been activated and the scanning beam surface has been scanned at the length of 70µm. The movement of the measuring cantilever tip took place in the axis of the sensor. At the same time, the optical system for measuring the twist of the measuring cantilever in the atomic force microscope was on. A comparison of the friction force signal from the atomic force microscope and the sensor was made, which resulted in the determination of the calibration coefficient, which amounted to 6.94µN / V.

The subject of the invention is also a device for calibrating lateral force in a microscope. The subject matter of the device is that under the tip of the AFM microscope measuring cantilever a measuring beam of a force sensor with a known roughness is placed, the control surface of which is placed horizontally, the force sensor is coupled with a transducer which is connected to a comparative system with which the AFM microscope amplifier is also combined. Preferably, the force sensor is made in the MEMS (Micro-electro-mechanical system) technology and consists of a measuring beam suspended on elastic silicon rods whose deflection is measured by means of a capacitive sensor.

Preferably the roughness of the measuring beam is less than 5µm.

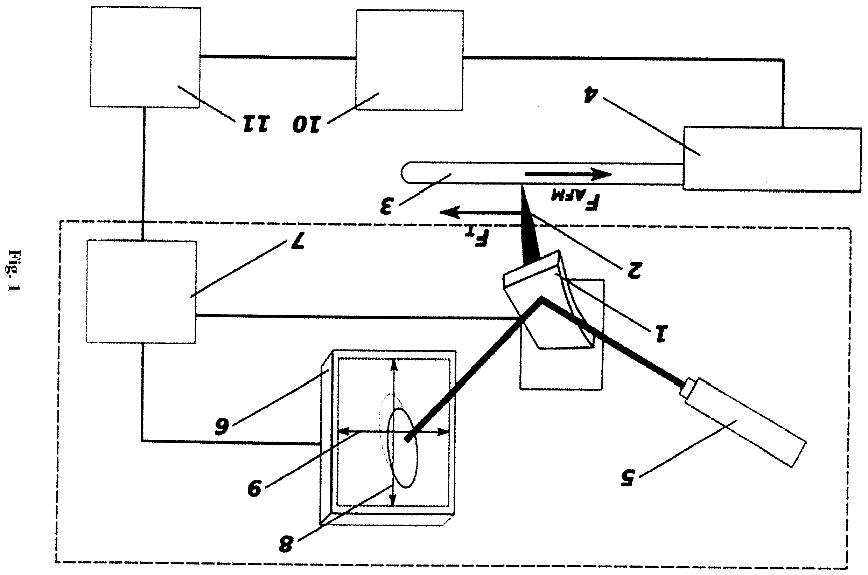

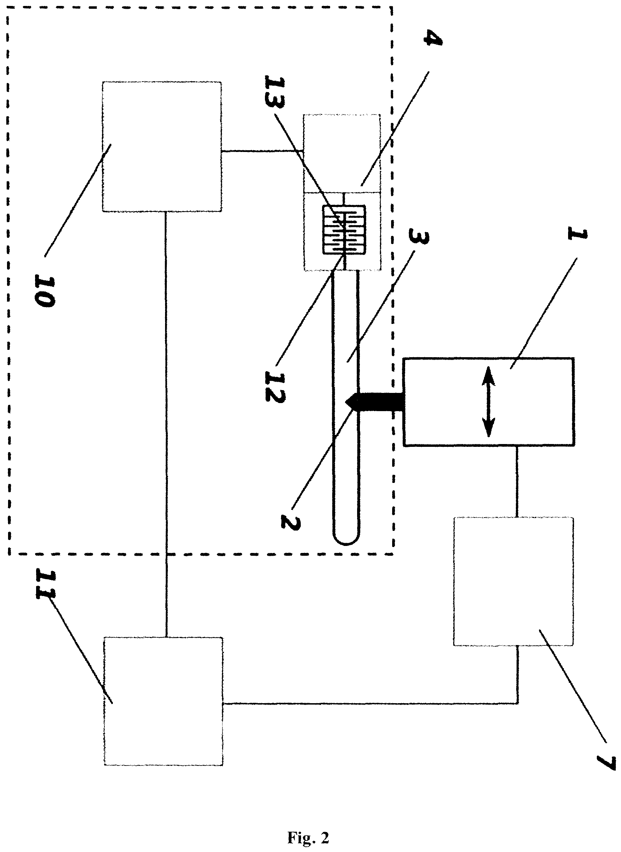

The device in an exemplary embodiment is shown in the drawing, in which Fig. 1 schematically shows the atomic force microscope assemblies, and Figure 2 shows the friction force measurement system.

The AFM microscope measuring cantilever 1 is based by its tip 2 on a measuring beam 3 of a force sensor 4. The force sensor 4 consists of a capacitive device 13 and a silicon measuring beam 3 suspended on silicon elastic rods 14. A transducer 10 is electrically coupled with the force sensor 4, which is connected to the comparison circuit 11. The AFM microscope amplifier 7 is also connected to the comparison circuit 11.

The device registers the force with which the tip 2 of AFM measuring cantilever slides over the surface of its measuring beam 3. Then, due to the appropriate software, the results of the force measurement from the device are correlated with the measurement of the twist signal of the AFM measuring cantilever 1 and on this basis the calibration coefficient of the twisting signal to the actual force exerted by the tip of the measuring cantilever 1 is determined.

## Claims

1. The method of side force calibration in the AFM microscope, which consists in measuring the force through the measuring bar of the force meter, **characterized in that** on the surface of the measuring beam of the force sensor with known roughness, the force resulting from the friction of the tip of the AFM during the movement of the cantilever on the surface of the measuring beam is applied, whereby the direction of measurement of the friction force is perpendicular to the axis of the measuring cantilever, and the friction force registered by the sensor is compared directly with the twisting signal of the microscope's measuring cantilever and on this basis the calibration factor of the lateral force of the microscope is determined.

2. Calibration method according to claim 1, **characterized in that** the displacement of the force sensor measuring beam is measured by means of a capacitive sensor

3. Side force calibration device in AFM microscopes with a measuring cantilever with a tip as well as an optical system for determining the twisting of the measuring cantilever, built from a force sensor (4), a transducer (10) and a comparison circuit (11), **characterized in that** under the tip (2) of the measuring cantilever (1) there is a measuring beam (3) of a force sensor (4) with a known roughness, which control surface is placed horizontally, the force sensor (4) being coupled with the transducer (10) which is connected to the comparison circuit (11) with which the amplifier (7) of the AFM microscope is also connected.

4. Calibration device according to claim 3, **characterized in that** the force sensor (4) is made in MEMS technology (Micro-electro-mechanical system) and consists of a measuring beam (3) suspended on elastic beam bars (12) displacement of said beam (3) is measured using a capacitive sensor (13).

5. The device according to claim 3, **characterized in that** the roughness of the measuring beam (3) is less than 5µm.
